**Europäisches Patentamt**

**European Patent Office**

**Office européen des brevets**

(11) Veröffentlichungsnummer: **0 301 345 B1**

# EUROPÄISCHE PATENTSCHRIFT

(45) Veröffentlichungstag der Patentschrift: **13.05.92**

(21) Anmeldenummer: **88111501.8**

(22) Anmeldetag: **18.07.88**

(51) Int. Cl.⁵: **C08G 18/42**, C08G 18/72, C09D 191/00

(54) Verwendung von Reaktivverdünner für oxidativ trockende.

(30) Priorität: **30.07.87 DE 3725259**

(43) Veröffentlichungstag der Anmeldung:
**01.02.89 Patentblatt 89/05**

(45) Bekanntmachung des Hinweises auf die
Patenterteilung:
**13.05.92 Patentblatt 92/20**

(84) Benannte Vertragsstaaten:
**AT BE CH DE ES FR GB IT LI NL SE**

(56) Entgegenhaltungen:
**EP-A- 0 175 097**
**EP-A- 0 209 823**
**FR-A- 1 456 158**
**GB-A- 1 199 810**

(73) Patentinhaber: **BAYER AG**

**W-5090 Leverkusen 1 Bayerwerk(DE)**

(72) Erfinder: **Höhlein, Peter, Dr.**
**Windmühlenweg 3 e**
**W-4152 Kempen 3(DE)**
Erfinder: **Kreiss, Eberhard, Ing.-grad.**
**Ratherstrasse 22**
**W-4150 Krefeld(DE)**

**Beschreibung**

Die Erfindung betrifft die Verwendung Ethergruppen enthaltender Polyurethane als Reaktivverdünner für oxidativ trocknende Bindemittel, die beispielsweise für Beschichtungsmittel (insbesondere Lacke), Dichtungsmaterialien und Klebstoffe eingesetzt werden können.

Unter "Reaktivverdünnern" versteht man niedrigviskose Flüssigkeiten, die harzartige Bindemittel verdünnen und dadurch dem Bindemittel die zu seiner Applikation notwendige Viskosität verleihen, zur Reaktion mit dem Bindemittel befähigte funktionelle Gruppen enthalten und beim Härtungsvorgang zum überwiegenden Teil - jeweils abhängig von ihrer Flüchtigkeit - Bestandteil des gehärteten Bindemittels werden.

Aufgabe der Erfindung war es, Reaktivverdünner aufzufinden, wodurch Reaktivverdünner-haltige Bindemittelsysteme auf Basis oxidativ trocknender Bindemittel zugänglich werden sollten, die unter Ausbildung einwandfreier Beschichtungen in praxisgerechten Zeiten aushärten und keine oder nur geringe Mengen organischer Lösungsmittel, die nicht als Reaktivverdünner wirken, benötigen.

Überraschenderweise wurde gefunden, daß sich Umsetzungsprodukte aus Ethergruppen-haltigen Polyolen, gesättigten und/oder ungesättigten Monocarbonsäuren und Isocyanaten, die copolymerisierbare C-C-Doppel- und/oder Dreifachbindungen enthalten, hervorragend als Reaktivverdünner für oxidativ trocknende Bindemittel eignen.

Gegenstand der Erfindung ist die Verwendung von Umsetzungsprodukten, erhältlich durch Umsetzung von

A. Polyolen mit einer Hydroxylzahl von 50 bis l000, vorzugsweise 100 bis 800,
die im Mittel mindestens 3, vorzugsweise 4 bis 8, Hydroxylgruppen pro Molekül und
pro Hydroxylgruppe im Mittel 0,5 bis 15, vorzugsweise 1 bis 5, aber pro Molekül im Mittel insgesamt nicht mehr als 20 Ethergruppen enthalten, und

B. 0,05 bis 0,90, vorzugsweise 0,10 bis 0,85, Äquivalenten (bezogen auf Hydroxylgruppen von A) vorzugsweise ungesättigter $C_2$-$C_{30}$-, vorzugsweise $C_8$-$C_{24}$-Monocarbonsäuren,
zu Verbindungen mit einer Säurezahl von maximal 5, einer Hydroxylzahl von 10 bis 800, vorzugsweise 15 bis 500, und einem mittleren Gehalt von 0,2 bis 6 Hydroxylgruppen pro Molekül
und weitere Umsetzung mit

C. bis zu äquivalenten Mengen (bezogen auf die Hydroxylgruppen des Veresterungsprodukts aus A und B einerseits und die Isocyanatgruppen von C andererseits), vorzugsweise 0.10 bis 0.95, insbesondere 0,15 bis 0,30 Äquivalenten (bezogen auf Hydroxylgruppen von A und Isocyanatgruppen von C) Isocyanat, das mindestens 1 copolymerisierbare C-C-Doppel- oder -Dreifachbindung pro Molekül C enthält,
zu einem Ethergruppen-haltigen Polyesterurethan,

als Reaktivverdünner für oxidativ trocknende Bindemittel.

Die mit diesen Reaktivverdünnern - vorzugsweise im Gewichtsverhältnis (5 bis 95) : (95 bis 5), insbesondere im Gewichtsverhältnis (15 bis 85) : (85 bis 15) - versehenen oxidativ trocknenden Bindemittel eignen sich besonders für Lacke, wie z.B. Maler-, Bauten- und Industrielacke. Es können festkörperreiche Lacke mit guten Trocknungseigenschaften hergestellt werden, die zu Lackierungen mit guter Überlackierbarkeit, guten mechanischen Eigenschaften, bestem Aussehen und ausgezeichneter Beständigkeit verarbeitet werden können.

Bevorzugte Polyole A sind Umsetzungsprodukte von I. als "Starter" eingesetzten Polyhydroxylverbindungen mit im Mittel mindestens 3, vorzugsweise 4 bis 8 Hydroxylgruppen und 3 bis 12 C-Atomen pro Molekül und II. Oxalkylierungsmitteln mit 2 bis 8, vorzugsweise 2 oder 3, C-Atomen pro Molekül.

Bevorzugte Starter A.I umfassen beispielsweise Glycerin, Trimethylolethan und -propan, Pentaerythrit, Sorbit, Mannit, Saccharose, Lactose, Sorbitan, α-Methylglycosit, α-Hydroxy-$C_1$-$C_4$-alkyl-glycosit, und Gemische dieser Verbindungen. Im Rahmen der anspruchsgemäß zulässigen mittleren Hydroxylfunktionalität können neben mindestens dreiwertigen Hydroxylverbindungen A.I auch Diole mit bis zu 8 C-Atomen, wie z.B. Wasser, Ethylenglykol, Propylenglykol, Butandiol-1,4, Diethylenglykol, Dipropylenglykol und deren Mischungen eingesetzt werden. So läßt sich beispielsweise aus Sorbit (Funktionalität = 6) oder Sorbitan (Funktionalität = 4) mit Ethylen- oder Propylenglykol oder Wasser (Funktionalität = 2) ein Startergemisch herstellen, dessen mittlere Hydroxylfunktionalität unter der der höherwertigen eingesetzten Polyole liegt, aber immer noch mindestens 3 beträgt.

Statt der Einstellung der Funktionalität der Polyole A durch Auswahl der bei der Oxalkylierung einzusetzenden Starter A.I ist es auch möglich, separat hergestellte Ethergruppen-haltige Polyole A unterschiedlicher Funktionalität und/oder Hydroxylzahl so miteinander zu mischen, daß sich die anspruchsgemäß geforderten Parameter ergeben.

Bevorzugte Oxalkylierungsmittel A.II umfassen beispielsweise $C_1$-$C_8$-Alkylenoxide wie Ethylenoxid, Propylenoxid, 1,2- und 2,3-Butylenoxid, Styroloxid und Gemische dieser Verbindungen. Besonders bevorzugte Oxalkylierungsmittel sind Ethylenoxid, Propylenoxid und deren Gemische.

Als Monocarbonsäuren B werden vorzugsweise aliphatische Monocarbonsäuren ausgewählt; besonders bevorzugt werden ungesättigte Fettsäuren mit einer Jodzahl von 10 bis 300 verwendet. Beispiele bevorzugter Monocarbonsäuren sind Essigsäure, Buttersäure, n-Heptancarbonsäure, 2-Ethylhexancarbonsäure, n-Nonancarbonsäure, synthetische Fettsäuregemische mit 10 bis 18 Kohlenstoffatomen und insbesondere ungesättigte $C_{10}$-$C_{22}$-Fettsäuren wie Sojaölfettsäure, Ricinusölfettsäure, Linolsäure, Olivenölfettsäure, Erdnußölfettsäure, Safflorölfettsäure, Konjuvandolfettsäure, Ölsäure, Tallölfettsäure und deren Gemische. Über Art und Menge der ungesättigten Monocarbonsäuren läßt sich die Reaktivität der Umsetzungsprodukte aus A, B und C steuern.

Die Veresterung der Reaktanden A und B kann auf an sich bekannte Weise bei 180 bis 260°C erfolgen und wird vorzugsweise so lange fortgesetzt, bis die Säurezahl auf 5 oder darunter gesunken ist. Die Viskosität liegt dann im allgemeinen zwischen 50 und 4000 mPa.s, gemessen im Hoeppler-Viskosimeter bei 20°C.

Bevorzugte Isocyanate C, die mindestens 1 C-C-Doppel-oder -Dreifachbindung pro Molekül enthalten, sind beispielsweise Vinylisocyanate, Isocyanatoalkylacrylate und -methacrylate, Vinyl- und Alkenylgruppen tragende Aryl-und Aralkylisocyanate wie z.B. Vinylisocyanat, Isocyanatoethyl-(meth-)acrylat, Isocyanatopropyl(meth-) acrylat, Vinylbenzylisocyanat, Isopropenylbenzylisocyanat, Vinylphenylisocyanat, Isopropenylphenylisocyanat, Isopropenyl-dimethylbenzylisocyanat.

Bevorzugte Isocyanate C, die mindestens 1 C-C-Doppel-oder Dreifachbindung pro Molekül enthalten, können auch durch ungesättigte - vorzugsweise einwertige - Alkohole oder ungesättigte primäre oder sekundäre Amine mit Polyisocyanaten, vorzugsweise Diisocyanaten, hergestellt werden. Für diesen Zweck bevorzugte ungesättigte, einwertige Alkohole sind vorzugsweise solche mit 3 bis 18 C-Atomen, wie beispielsweise Allylalkohol und dessen Derivate, wie z.B. Trimethylolpropandiallylether, Buten-1-ol, Buten-2-ol, Penten-1-ol, Penten-2-ol, Hexen-1-ol, Hexen-2-ol, Hexen-3-ol, Hydroxyethyl(meth-)acrylat, Hydroxypropyl(meth-)acrylat und Hydroxybutyl(meth-) acrylat. Besonders bevorzugt werden einwertige Alkohole mit C-C-Dreifachbindungen, wie z.B. Propin-1-ol, Butin-1-ol, Butin-2-ol, Pentin-2-ol eingesetzt. Für diese Zwecke bevorzugte ungesättigte Amine sind Monoamine mit 3 bis 28 C-Atomen, wie z.B. Allylamin, Isopropenylamin, 1-Aminobuten, Hexenamin usw.

Geeignete Isocyanate zur Umsetzung mit ungesättigten einwertigen Alkoholen oder ungesättigten Monoaminen sind grundsätzlich alle Verbindungen, die mindestens zwei Isocyanatgruppen pro Molekül tragen. Derartige Isocyanate sind insbesondere Diisocyanate mit 8 bis 16 C-Atomen, wie z.B. Hexamethylendiisocyanat, Toluylendiisocyanat, 4,4'-Diisocyanatodiphenylmethan, 4,4'-Diisocyanato-dicyclohexylmethan, 1-Isocyanato-3-isocyanatomethyl-3,5,5-trimethylcyclohexan ("Isophoron"-diisocyanat). Solche und andere Polyisocyanate sind beispielsweise in den folgenden Patentschriften beschrieben: US-PS 3 124 605, 3 358 010, 3 903 126, 3 903 125, 3 976 622, 3 183 122, 3 394 111, 3 645 979, 3 919 218, GB-PS 1 060 430, 1 234 972, 15 063 703 und 1 458 564. Dabei können die Polyisocyanate auch Biuretgruppen, Urethangruppen, Allophanatgruppen oder Isocyanuratgruppen enthalten.

Biuretgruppen enthaltende Polyisocyanate stellen vorzugsweise Umsetzungsprodukte aus Alkylendiisocyanaten mit 4 bis 6 C-Atomen in der Alkylengruppe und Wasser dar.

Urethangruppen enthaltende Polyisocyanate sind vorzugsweise aus aliphatischen Tri- und Tetraolen mit 3 bis 8 C-Atomen, wie z.B. Trimethylolpropan, Glycerin, Pentaerythrit und aromatischen oder cycloaliphatischen Diisocyanaten mit 8 bis 18 C-Atomen, wie 2,4- und/oder 2,6-Toluylendiisocyanat, 2,4'- und/oder 4,4'-Diisocyanatodicyclohexylmethan, "Isophoron"diisocyanat usw. aufgebaut, wobei pro 1 Hydroxylgruppe des Polyols etwa 0,5 Mol Diisocyanat reagiert hat.

Isocyanuratgruppen aufweisende Polyisocyanate stellen Cyclotrimerisationsprodukte der vorgenannten aliphatischen und aromatischen Diisocyanate dar, insbesondere aus Toluylendiisocyanat oder Hexamethylendiisocyanat.

Aus Reaktivitätsgründen finden vorzugsweise Polyisocyanate, wie "Isophoron"diisocyanat, 1-Isocyanatomethyl-3-methyl-3-isocyanato-cyclohexan und 2,4-Diisocyanatoalkylbenzole, wie z.B. Toluylendiisocyanat, Verwendung. Zu den bevorzugten 2,4-Diisocyanatoalkylbenzolen zählen auch technische Gemische von 2,4-Diisocyanato-$C_{10}$-$C_{13}$-alkylbenzolen. Aus Gründen des gezielten Molekülaufbaus sind Polyisocyanate mit Isocyanatgurppen unterschiedlicher Reaktivität von besonderer Bedeutung.

Die Umsetzungen zu den Urethan- bzw. Harnstoffgruppen enthaltenden Isocyanaten C können bei Temperaturen zwischen 10 und 120°C durchgeführt werden.

Dabei ist die Verwendung von die Isocyanataddition beschleunigenden Katalysatoren wie z.B. Dibutylzinndilaurat, Dibutylzinnoxid usw. angebracht.

3

Die bevorzugtesten oxidativ trocknenden Bindemittel sind Alkydharze und Polybutadienöle.

Unter Alkydharzen versteht man durch Polykondensation nach bekannten Verfahren aus Alkoholen und Carbonsäuren hergestellte Polykondensate der Art, wie sie z.B. in Römpp's Chemielexikon, Bd. 1, S. 202, Frankh'sche Verlagsbuchhandlung, Stuttgart, 1966 definiert oder bei D.H. Solomon, The Chemistry of Organic Filmformers, S. 75-101, John Wiley & Sons Inc., New York, 1967, beschrieben sind.

Unter "Alkydharzen" werden in dieser Anmeldung fettsäure- bzw. ölmodifizierte Polyester verstanden.

Für die Synthese der Alkydharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekü oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure und Trimellithsäureanhydrid und Pyromellithsäureanhydrid. Phthalsäureanhydrid ist die gebräuchlichste Säurekomponente.

Für die Synthese der Alkydharze bevorzugte Alkohole sind aliphatische, cycloaliphatische und/oder araliphatische Alkohole mit 1-15, vorzugsweise 2-6 C-Atomen, und 1-6, vorzugsweise 1-4, an nichtaromatische C-Atome gebundenen OH-Gruppen pro Molekül, z.B. Glykole, wie Ethylenglykol, Propandiol-1,2 und -1,3, Butandiol-1,2, -1,3, und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl)-cyclohexan, Adipinsäure-bis-(ethylenglykolester); Etheralkohole, wie Di- und Triethylenglykol, Dipropylenglykol; Dimethylolpropionsäure, oxalkylierte Bisphenole mit 2 $C_2$-$C_3$-Oxalkylgruppen pro Molekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit. Die gebräuchlichsten Alkohole sind Glycerin, Trimethylolpropan, Neopentylglykol und Pentaerythrit.

Für die Herstellung der Alkydharze bevorzugte Monocarbonsäuren sind aliphatische, cycloaliphatische gesättigte und ungesättigte und/oder aromatische Monocarbonsäuren mit 3-24 C-Atomen pro Molekül, wie Benzoesäure, p-tert.-Butylbenzoesäure, Tolylsäure, Hexahydrobenzoesäure, Abietinsäure und Milchsäure.

Die Alkydharze können auch einwertige Alkohole mit 1 bis 8 C-Atomen, wie Methanol, Propanol, Cyclohexanol, 2-Ethylhexanol, Benzylalkohol in Mengen bis zu 15 Gew.-%, bezogen auf Alkydharz, einkondensiert enthalten. Ebenso ist es möglich, bis zu 25 % der Esterbindungen durch Urethanbindungen zu ersetzen.

In den Alkydharzen beträgt die Öllänge, berechnet als Triglycerid und bezogen auf das Alkydharz, in der Regel 5 bis 75, vorzugsweise 20 bis 70 Gew.-%. Die trocknenden oder nichttrocknenden Fettsäuren, die im allgemeinen 6 bis 24 C-Atome enthalten, können entweder als solche oder in Form ihrer Glycerinester (Triglyceride) eingesetzt werden.

Als bevorzugt sind pflanzliche und tierische Öle, Fette oder Fettsäuren zu nennen, wie z.B. Kokos-, Erdnuß-, Ricinus-, Holz-, Oliven-, Sojabohnen-, Lein-, Baumwollsaatöl, Saffloröl oder -ölfettsäuren, dehydratisiertes Ricinusöl bzw. -fettsäure, einfach ungesättigte Fettsäuren, Schmalz, Talg und Trane, Tallölfettsäure, sowie synthetische Fettsäuren, die durch Konjugierung oder Isomerisierung aus natürlichen ungesättigten Ölen oder Fettsäuren hergestellt sein können. Bevorzugte gesättigte Fettsäuren sind z.B. Kokosölfettsäuren, 2-Ethylhexansäure, Isononansäure (3,4,4-Trimethylhexansäure), sowie Palmitin- und Stearinsäure.

Das als Zahlenmittel bestimmte Molekulargewicht der Alkydharze beträgt 2000 - 10 000 (bis zu Molekulargewichten von 5000 dampfdruckosmometrisch bestimmt in Dioxan und Aceton, wobei bei differierenden Werten der niedrigere Wert als korrekt angesehen wird; bei Molekulargewichten über 5000 membranosmometrisch in Aceton bestimmt).

Polybutadienöle im Sinne der Erfindung sind Butadien-1,3-homopolymerisate sowie Copolymerisate des Butadiens-1,3 mit anderen mischpolymerisierbaren Verbindungen, wobei die Copolymerisate mindestens 50 Gew.-% ein-kondensierte Reste des Butadiens-1,3 enthalten. "Andere mischpolymerisierbare Verbindungen" sind beispielsweise α-Methylstyrol, Vinylacetat und (Meth-)Acrylsäureester, vorzugsweise aber Styrol, Acrylnitril und deren Mischungen.

Die Polybutadienöle besitzen im allgemeinen als Zahlenmittel bestimmte Molekulargewichte von 500 bis 10 000, vorzugsweise von 800 bis 5000, und OH-Zahlen von 0 bis 200.

Bevorzugte Polybutadienöle sind Butadienhomopolymerisate. Die Homopolymeren des Butadiens können in zwei Strukturisomeren vorliegen, nämlich als 1,4-Polybutadien sowie als 1,2-Polybutadien. 1,4-Polybutadiene sind linear, unverzweigt und enthalten in der Hauptkette Doppelbindungen, die "cis" oder "trans" konfiguriert sein können. Die 1,2-Polybutadiene enthalten Seitengruppen mit einer vinylischen Doppelbindung.

Als 1,4-Polybutadiene sind 1,4-Polybutadiene mit mehr als 50 % cis-konfigurierten Doppelbindungen geeignet. Besonders geeignet sind derartige Produkte mit 70 bis 98 % cis-konfigurierten Doppelbindungen. Es ist bekannt, daß cis-1,4-Polybutadiene sehr gute Trocknungseigenschaften aufweisen, so daß diese Rohstoffe in den Fällen bevorzugt sind, in denen rasche Trocknung erwünscht ist.

Nach einer weiteren Ausführungsform der Erfindung können auch 1,4-Polybutadiene verwendet werden, die mehr als 50 % transständige Doppelbindungen aufweisen, z.B. Produkte mit 60 bis 98 % transständigen Doppelbindungen. Aufgrund der höheren Steifheit dieser Produkte wird der Fachmann trans-1,4-Polybutadiene insbesondere dann als Rohstoff wählen, wenn auf höhere Härte der Beschichtungen Wert gelegt wird.

Eine weitere Ausführungsform betrifft Poly-1,2-butadiene, also Materialien mit vinylischen Doppelbindungen. Ein sehr gut geeignetes Ausgangsmaterial ist dabei ein Produkt mit mehr als 80, vorzugsweise mehr als 90 % seitenständigen Doppelbindungen.

In der Mehrzahl der Fälle wird der Fachmann Isomerengemische von Polybutadienen einsetzen, also etwa 1,4-Polybutadiene mit 20 bis 70 % cis-ständigen Doppelbindungen und/oder 20 bis 50 % transständigen Doppelbindungen, die daneben auch noch Seitengruppen mit vinylischen Doppelbindungen aufweisen können. Bezüglich der Herstellbarkeit von Polybutadienen mit unterschiedlicher Konfiguration sei beispielsweise auf die Monographie "Makromoleküle" von H.G. Elias, 4. Auflage, Hüthig und Wepf-Verlag, Basel, Heidelberg, New York, Seiten 676 (Konfigurationsänderung "cis" zu "trans") sowie S. 744 bis 746 und 1012 ff, verwiesen.

Übliche Modifizierungen der Polybutadienöle, wie Funktionalisierung über Comonomere, wie z.B. Hydroxyethyl(meth)acrylat, oder Epoxidierung können, falls zweckmäßig, vorgenommen werden.

Die erfindungsgemäß zu verwendenden Umsetzungsprodukte aus A, B und C werden den oxidativ trocknenden Bindemitteln in der Regel in Mengen von 10 bis 95, vorzugsweise 20 bis 60, Gew.-%, bezogen auf die Summe von Bindemittel und Reaktivverdünner, zugesetzt. Der Gehalt organischer Lösungsmittel, die nicht als Reaktivverdünner wirken (beim Härten also nicht im gehärteten Produkt verbleiben), kann durch die erfindungsgemäß zu verwendenden Reaktivverdünner deutlich gesenkt oder gar völlig vermieden werden.

Die Herstellung der Kombinationen aus oxidativ trocknendem Bindemittel und Umsetzungsprodukt aus den Komponenten A, B und C kann nach verschiedenen Methoden erfolgen:

A) Zusammengeben von
   1. Bindemittel und
   2. Umsetzungsprodukt aus A, B und C;
Homogenisieren bei erhöhter Temperatur oder - vorzugsweise - bei Raumtemperatur.

B) Zusammengeben von
   1. Bindemittel,
   2. Veresterungsprodukt aus A und B und
   3. Isocyanat C;
Umsetzung bei Raumtemperatur oder - vorzugsweise - erhöhter Temperatur (so daß das Veresterungsprodukt mit der reaktiven Verbindung C reagiert).

C) Zusammengeben von
   1. Bindemittel,
   2. Polyol A,
   3. Monocarbonsäure B und
   4. Isocyanat C;
Umsetzung bei erhöhter Temperatur (so daß die Komponnten A, B und miteinander reagieren).

Für den Fall, daß als Isocyanat C die oben beschriebenen Umsetzungsprodukte aus Polyisocyanat und ungesättigten einwertigem Alkohol bzw. ungesättigtem Amin in den Reaktivverdünner eingebaut werden sollen, kann zunächst aus dem Monoalkohol bzw. Monoamin mit dem Polyisocyanat ein Addukt mit einer freien Isocyanatgruppe hergestellt werden, das dann in einem weiteren Reaktionsschritt mit den OH-Gruppen der Verbindung B) zur Reaktion gebracht wird.

Es ist aber auch möglich, die Reaktion des Monoalkohols/-amins mit dem Polyisocyanat und der Verbindung B) simultan ablaufen zu lassen, d.h. nach Mischung der Verbindung B) mit dem Monoalkohol/-amin wird das Polyisocyanat langsam zudosiert.

Übliche Zusätze, die zur Herstellung von Beschichtungsmitteln mitverwendet werden können, sind z.B. organische Lösungsmittel, die nicht als Reaktivverdünner wirken, Sikkative, Verlaufsmittel, Hautverhinderungsmittel, Antischaummittel, viskositätsregulierende Stoffe, Pigmente, Farbstoffe, Härtungskatalysatoren, UV-Absorber, Stabilisatoren gegen thermischen bzw. oxidativen Abbau, usw.

Bevorzugte organische Lösungsmittel sind z.B. einwertige Alkohole wie Methanol, Ethanol, Isopropanol, Carbonsäurealkylester wie Essigsäureethyl- und -butylester, Etheralkohole wie Propylenglykolmonoethylether, Etherester wie Propylglykolacetat, Ketone wie Methylethylketon, Methylisobutylketon, Cyclohexanon, Aromaten wie Toluol, Xylol und aliphatische Kohlenwasserstoffe wie verschiedene Benzinfraktionen.

Die organischen Lösungsmittel werden vorzugsweise in Mengen unter 20, insbesondere unter 10, Gew.-%, bezogen auf die Summe von Bindemittel und Reaktivverdünner, eingesetzt. Besonders gerne verzichtet man auf organische Lösungsmittel vollständig.

Die Beschichtungsmittel können für Substrate aller Art wie Holz, Kunststoffe, Leder, Textilien, Glas, Keramik, Metall, dienen. Sie lassen sich mit den üblichen Applikationsmethoden wie Spritzen, Streichen, Fluten, Gießen, Tauchen, Walzen aufbringen. Die Mengen werden im allgemeinen so gewählt, daß Trockenfilmdicken der Beschichtungen (nach der Härtung) von 0,005 bis 0,10 mm resultieren.

Die Beschichtungsmittel können in Form von Klarlacken als auch in Form pigmentierter Lacke verwendet werden. Sie können lösungsmittelfrei eingesetzt werden, führen zu Filmen mit schneller An- und Durchtrocknung und ergeben nach Härtung bei Temperaturen von 0 bis 130°C, vorzugsweise bei Raumtemperatur, Beschichtungen mit runzelfreien Oberflächen.

Zur Herstellung von Dichtungsmassen oder Klebstoffen kann man der Kombination aus oxidativ trocknendem Bindemittel und Reaktivverdünner die für diese Massen typischen Additive zusetzen.

Die in den nachfolgenden Beispielen genannten Prozentangaben beziehen sich auf das Gewicht; Teile bedeuten Gewichtsteile.

Beispiele

Herstellung der Reaktivverdünner-Vorstufe II B
(am Beispiel der Vorstufe II $B_1$)

In einem mit Rührer, Heizung, Stickstoffeinleitungsrohr, Kolonne und Wasserabgang ausgestatteten 5-l-Rührkessel wurden 2733 g Sojaölfettsäure und 1943 g eines propoxylierten Sorbits mit einer Hydroxylzahl von 425 und einem Äquivalentgewicht von 125 unter Durchleiten von 2 bis 3 l Stickstoff/Stunde eingewogen. Anschließend wurde innerhalb von 3 Stunden auf 200°C aufgeheizt, wobei die am Kolonnenkopf gemessene Temperatur 105°C nicht überschritt. Sobald eine Sumpftemperatur von 200°C erreicht war und die Temperatur am Kolonnenkopf 90°C unterschritt, wurde zuerst die Kolonne entfernt und dann der Stickstoffstrom auf 10 bis 12 1/Stunde erhöht. Als eine Säurezahl von 1,8 erreicht war, wurde auf 100°C abgekühlt und das Produkt über ein Gewebefilter filtriert: Es resultierte eine Flüssigkeit mit einer OH-Zahl von 73, einer Jodfarbzahl von 2 und einer Viskosität von 368 mPa.s bei 23°C.

Die Reaktivverdünnervorstufen II $B_2$ bis II $B_5$ wurden analog hergestellt (Tabelle I).

Tabelle I

| Reaktivverdünner-Vorstufe | Säure Menge/Art [g] | Propoxyliertes Polyol Menge/Art [g] | OH-Zahl | $\text{ÄG}^{1)}$ | Endprodukt | | | |
|---|---|---|---|---|---|---|---|---|
| | | | | | Säure-Zahl | OH-Zahl | $\text{JFZ}^{2)}$ | Viskosität [mPa.s] bei 23°C |
| II B$_1$ | 2733 Soja | 1943 Sorbit | 425 | 125 | 1,8 | 73 | 3 | 368 |
| II B$_2$ | 2389 Soja | 2264,4 Sorbit | 425 | 125 | 1,8 | 112 | 2-3 | 605 |
| II B$_3$ | 2991 Soja | 1701 Sorbit | 425 | 125 | 1,9 | 34 | 3 | 306 |
| II B$_4$ | 2468 ® Konjuvandol 50 $^{3)}$ | 1521 Sorbit | 425 | 125 | 1,7 | 70 | 3 | 858 |
| II B$_5$ | 3226 Tall $^{4)}$ | 817,2 Sorbit 567 PG$^{5)}$ | 425 515 | 125 109 | 4,2 | 22,6 | 8 | 168 |

[1] Äquivalentgewicht,

[2] Jodfarbzahl,

[3] Konjugierte, ungesättigte Fettsäure auf Pflanzenölbasis mit einem Anteil konjugierter Doppelbindungen zwischen 40 und 50 %

[4] Tallölfettsäure,

[5] Propylenglykol

Herstellung der Reaktivverdünner II C (Tabelle II)

Die Reaktivverdünner können auf zwei verschiedenen Wegen hergestellt werden.

Weg I

Es wird die OH-Funktionen tragende Reaktivverdünner-Vorstufe II B in einem mit Rührer und Tropftrichter versehenen Dreihalskolben vorgelegt, zusammen mit einem Katalysator für die OH/NCO-Reaktion unter Durchleiten von Stickstoff auf 70°C erwärmt und bei dieser Temperatur durch Zutropfen der ungesättigten Isocyanatkomponente [1]umgesetzt, bis ein NCO-Wert < 0,1 % erreicht ist.

Letztere werden in einem separaten Syntheseschritt unter den gleichen Reaktionsbedingungen des Weges I aus z.B. Isophorondiisocyanat und Propin-1-ol hergestellt.

Weg II

Die OH-Funktion aufweisende Reaktivverdünner-Vorstufe II B wird zusammen mit dem ungesättigten Alkohol vorgelegt und durch Zugabe des flüssigen oder gelösten Polyisocyanats unter Erwärmen auf ca. 70°C und Durchleiten von Stickstoff, gegebenenfalls durch Zugabe eines Katalysators, bis zu einem NCO-

[1]Als ungesättigte Isocyanatkomponente kommen Produkte, wie Isocyanatoethylmethacrylat usw., aber auch die Addukte aus äquimolaren Mengen Diisocyanat und ungesättigtem Alkohol zum Einsatz.

Wert < 0,1 % umgesetzt.

Tabelle II

| Reaktiv-verdünner | Vorstufe | Reaktionspartner | Synthese-weg | OH-Zahl | JFZ | NCO-Gehalt [%] | Viskosität (23°C) [mPa.s] |
|---|---|---|---|---|---|---|---|
| II C$_1$ | 1767 g B$_3$ | 233 g Addukt aus IPDI[1]/Propin-1-ol(1:1) Katalysator[2] | I | 8,7 | 10 | 0,06 | 1925 |
| II C$_2$ | 1146 g B$_2$ | 604 g Addukt aus IPDI[1]/Propin-1-ol-(1:1) Katalysator[2] | I | 8,6 | 6 | 0,07 | hoch-viskos |
| II C$_3$ | 768,3 g B$_1$ | 231,7 g Addukt aus IPDI[1]/Propin-1-ol(1:1) Katalysator[2] | I | 9 | 25 | 0,15 | 35 000 |
| II C$_4$ | 696 g B$_1$ | 26,5 g TMP-Diallylether[3] 27,5 g IPDI[1] 0,19 g Katalysator[2] | II | 101 | 5 | 0,08 | 622 |
| II C$_5$ | 729,4 g B$_1$ | 20,6 g Isocyanato-ethylmethacrylat 0,19 g Katalysator[2] | I | 81 | 3 | 0,01 | 381 |
| II C$_6$ | 707,4 g B$_1$ | 14,6 g Hydroxyethyl-acrylat 28,09 g IPDI[1] 0,19 g Katalysator[2] | I | 111 | 3 | 0,07 | 577 |

Tabelle II (Fortsetzung)

| Reaktiv-verdünner | Vorstufe | Reaktionspartner | Synthese-weg | OH-Zahl | JFZ | NCO-Ge-halt [%] | Visko-sität (23°C) [mPa.s] |
|---|---|---|---|---|---|---|---|
| II C$_7$ | 705,8 g B$_1$ | 16,3 g Hydroxyethyl-methacrylat 1), 27,9 g IPDI 1), 0,19 g Katalysator 2) | I | 85 | 3 | 0,03 | 549 |
| II C$_8$ | 1429,2 g B$_1$ | 14,3 g Propin-1-ol, 56,5 g IPDI 1), 0,37 g Katalysator 2) | II | 67 | 5 | 0,08 | 634 |
| II C$_9$ | 1620 g B$_1$ | 16 g Propin-1-ol, 64 g IPDI 1), 0,43 g Katalysator 2) | II | 60 | 5 | 0,04 | 560 |
| II C$_{10}$ | 1546 g B$_4$ | 15,6 g Propin-1-ol, 57,8 g IPDI 1), 0,39 g Katalysator 2) | II | 53 | 3 | 0,03 | 697 |
| II C$_{11}$ | 723,4 g B$_5$ | 22,8 g Isocyanatoethyl-methacrylat, 0,19 g Katalysator 2) | I | 3 | 4 | 0,08 | 425 |

1) "Isophoron"diisocyanat, 2) Dibutylzinndilaurat, 3) Trimethylolpropan-diallylether

Herstellung der festkörperreichen Bindemittel

Vergleich 1

In einem 10 1-Rührbehälter mit Stickstoffeinleitungsrohr und Wasserabscheider wurden 4515 g Sojaölfettsäure, 1392 g Pentaerythrit und 1780 g Pthalsäureanhydrid eingewogen und unter Einleitung von 6 1 Stickstoff/Stunde bis zum Erreichen einer Viskosität entsprechend einer Auslaufzeit (hier und nachfolgend: jeweils gemessen gemäß DIN 53 211 im DIN-Becher 4) von 63 s (60 %ig in Benzin, Siedebereich: 120-180 ° C) kondensiert, auf 180 ° C abgekühlt und bis zum Erreichen einer Viskosität entsprechend einer Auslaufzeit von 73 s (60 %ig in Benzin) und einer Säurezahl von 17 gehalten. Nach dem Abkühlen und Herstellen einer 75 %igen Lösung in Benzin resultierte eine Harzlieferform mit einer Viskosität von 8395 mPa.s bei 20 ° C.

Beispiel 1

1912,5 g des in Vergleich 1 beschriebenen Alkydharzes (lösungsmittelfrei), wurden in einem 3 1-Dreihalskolben auf 120°C unter Durchleiten von 1/2 1 Stickstoff/Stunde aufgeschmolzen und mit 637,5 g Reaktivverdünner II $C_9$ gemischt. Nach dem Einstellen eines Feststoffgehaltes von 84,9 % durch Zugabe von 450 g Benzin resultierte eine Bindemittelmischung mit einer Säurezahl von 9,3, einer OH-Zahl von 20 und einer Viskosität von 5071 mPa.s (23°C).

Beispiel 2

Aus 1912,5 g des in Vergleich 1 beschriebenen Alkydharzes (lösungsmittelfrei), 637,5 g Reaktivverdünner II $C_8$ und 450 g Benzin wurde analog Beispiel 1 eine Bindemittelmischung mit folgenden Kennzahlen hergestellt: Feststoffgehalt: 84,9 %; Viskosität: 5060 mPa.s (23°C); Säurezahl: 9,3; OH-Zahl: 36.

Beispiel 3

Aus 1125 g des in Vergleich 1 beschriebenen Alkydharzes (lösungsmittelfrei), 375 g Reaktivverdünner II $C_4$ und 305 g Benzin wurde analog Beispiel 1 eine Bindemittelmischung mit folgenden Kennzahlen hergestellt: Feststoffgehalt: 84,9 %; Säurezahl: 9,2; OH-Zahl: 46; Viskosität: 5775 mPa.s (23°C).

Beispiel 4

Aus 1125 g des in Vergleich 1 beschriebenen Alkydharzes (lösungsmittelfrei), 375 g Reaktivverdünner II $C_5$ und 334 g Benzin wurde analog Beispiel 1 eine Bindemittelmischung mit folgenden Kennzahlen hergestellt: Feststoffgehalt: 85,2 %; Säurezahl: 9,3; OH-Zahl: 41; Viskosität: 4301 mPa.s (23°C).

Beispiel 5

Aus 1125 g des in Vergleich 1 beschriebenen Alkydharzes (lösungsmittelfrei), 375 g Reaktivverdünner II $C_6$ und 305 g Benzin wurde analog Beispiel 1 eine Bindemittelmischung mit folgenden Kennzahlen hergestellt: Feststoffgehalt: 85,2 %; Säurezahl: 9,1; OH-Zahl: 40; Viskosität: 5390 mPa.s (23°C).

Beispiel 6

Aus 1125 g des in Vergleich 1 beschriebenen Alkydharzes (lösungsmittelfrei), 375 g Raktivverdünner II $C_7$ und 299,9 g Benzin wurde analog Beispiel 1 eine Bindemittelmischung mit folgenden Kennzahlen hergestellt: Feststoffgehalt: 85,4 %; Säurezahl: 9,7; OH-Zahl: 40; Viskosität: 5478 mPa.s (23°C).

Beispiel 7

Aus 1125 g Polybutadienöl[1] und 375 g Reaktivverdünner II $C_9$ wurde analog Beispiel 1 eine Bindemittelmischung mit folgenden Kennzahlen hergestellt: Feststoffgehalt: 98,6 %; Säurezahl: < 1; OH-Zahl: 25; Viskosität: 1230 mPa.s (23°C).

Aus den in Vergleich 1, sowie in den Beispielen 1, 2 und 7 beschriebenen Bindemitteln wurden Klarlacke nach der angegebenen Rezeptur hergestellt und einer vergleichenden Prüfung als oxidativ trocknende Malerlacke unterworfen. Die Ergebnisse der Prüfung sind in Tabelle III aufgelistet.

Herstellung der Klarlacke

Durch Zugabe von Benzin und Sikkativen wurden die Harze der Beispiele und des Vergleichs auf eine Viskosität entsprechend einer Auslaufzeit von 120 s eingestellt und auf Glasplatten mit einer Naßfilmdicke von ca. 120 μm aufgetragen. Als Sikkative wurden Cobaltoctoat, Bleioctoat und Calciumoctoat verwendet. Die auf den Feststoffgehalt bezogenen Metallgehalte betrugen 0,04 % Cobalt, 0,4 % Blei und 0,1 % Calcium.

[1] Polyöl 110: Handelsprodukt der Fa. Hüls AG, stereospezifisches Polybutadien mit $\overline{M}_n$ = 1500 und ca. 72 % 1,4-cis-Doppelbindungen, ca. 27 % 1,4-trans-Doppelbindungen und ca. 1 % Vinyl-Doppelbindungen.

| | Viskosität entsprechend einer Auslaufzeit (s) (DIN 53 211) | Festgehalt (%) | Antrocknung (h) | | Durchtrocknung nach Stunden | | |
|---|---|---|---|---|---|---|---|
| | | | staubtrocken | klebfrei | 24 | 48 | 72 |
| Beispiel 1 | 117 | 73,1 | 5,5 | 7,0 | 0[*]- | 0 | 0 |
| 2 | 123 | 73,8 | 4,5 | 6,5 | 0/1 | 0 | 0 |
| 7 | 123 | 98,6 | 1,5 | 4,0 | 0- | 0 | 0 |
| Vergleich | 119 | 58,9 | 2,5 | 4,0 | 1/2 | 0/1 | 0- |

0 = optimaler Wert

[*] 5 = schlechtester Wert

**Patentansprüche**

**Patentansprüche für folgende Vertragsstaaten : AT, BE, CH, DE, ES, FR, GB, IT, LI, NL, SE**

1. Verwendung von Umsetzungsprodukten, erhältlich durch Umsetzung von

   A. Polyolen mit einer Hydroxylzahl von 50 bis 1000, die im Mittel mindestens 3 Hydroxylgruppen pro Molekül und
   pro Hydroxylgruppe im Mittel 0,5 bis 15, aber pro Molekül im Mittel insgesamt nicht mehr als 20 Ethergruppen enthalten, und

   B. 0,05 bis 0,90, Äquivalenten (bezogen auf Hydroxylgruppen von A) $C_2$-$C_{30}$-, Monocarbonsäuren,

   zu Verbindungen mit einer Säurezahl von maximal 5, einer Hydroxylzahl von 10 bis 800, und einem mittleren Gehalt von 0,2 bis 6 Hydroxylgruppen pro Molekül
   und weitere Umsetzung mit

   C. bis zu äquivalenten Mengen (bezogen auf die Hydroxylgruppen des Veresterungsprodukts aus A und B einerseits und die Isocyanatgruppen von C andererseits), Isocyanat, das mindestens 1 copolymerisierbare C-C-Doppel- oder -Dreifachbindung pro Molekül C enthält,

   zu einem Ethergruppen-haltigen Polyesterurethan,
   als Reaktivverdünner für oxidativ trocknende Bindemittel.

2. Verwendung nach Anspruch 1, wobei die Polyole A im Mittel 4 bis 8 Hydroxylgruppen pro Molekül enthalten.

3. Verwendung nach Ansprüchen 1 und 2, wobei die Polyole A pro Hydroxylgruppe im Mittel 1 bis 5 Ethergruppen enthalten.

4. Verwendung nach Ansprüchen 1 bis 3, wobei die Polyole A eine Hydroxylzahl von 100 bis 800 besitzen.

5. Verwendung nach Ansprüchen 1 - 4, wobei Umsetzungsprodukte aus 0,30 bis 0,90 Äquivalenten (bezogen auf Hydroxylgruppen von A) Monocarbonsäuren B verwendet werden.

6. Verwendung nach Ansprüchen 1 - 5, wobei die Monocarbonsäuren B 8 bis 24 C-Atome pro Molekül besitzen.

7. Verwendung nach Ansprüchen 1-6 mit der Maßgabe, daß die Veresterungsprodukte aus A und B eine Hydroxylzahl von 15 bis 500 besitzen.

8. Verwendung nach Ansprüchen 1-7, wobei Umsetzungsprodukte aus 0,10 bis 0,95 Äquivalenten (bezogen auf Hydroxylgruppen von A und Isocyanatgruppen von C) Isocyanat C verwendet werden.

9. Verwendung nach Ansprüchen 1 bis 8 mit der Maßgabe, daß die Umsetzungsprodukte aus den Komponenten A, B und C in Gegenwart des oxidativ trocknenden, Bindemittels hergestellt werden.

EP 0 301 345 B1

**10.** Verwendung nach Ansprüchen 1 bis 9, wobei die oxidativen Bindemittel aus der Gruppen bestehend aus Alkydharzen und Polybutadienölen ausgewählt sind.

**Claims**

**Claims for the following Contracting States : AT, BE, CH, DE, ES, FR, GB, IT, LI, NL, SE**

**1.** The use of reaction products obtainable by reaction of
A. polyols having a hydroxyl value of 50 to 1,000 and containing on average at least three hydroxyl groups per molecule and an average of 0.5 to 15 ether groups per hydroxyl group, but an average of, in all, no more than 20 ether groups per molecule and
B. 0.05 to 0.90 equivalent (based on hydroxyl groups of A) $C_{2-30}$ monocarboxylic acids,
to form compounds having an acid value of at most 5, a hydroxyl value of 10 to 800 and an average content of 0.2 to 6 hydroxyl groups per molecule
and subsequent reaction with
C. up to equivalent quantities (based on the hydroxyl groups of the esterification product of A and B on the one hand and the isocyanate groups of C on the other hand) of isocyanate containing at least one copolymerizable C-C double bond or triple bond per molecule C,
to form a polyester urethane containing ether groups,
as reactive thinners for oxidatively drying binders.

**2.** The use claimed in claim 1, the polyols A containing an average of 4 to 8 hydroxyl groups per molecule.

**3.** The use claimed in claims 1 and 2, the polyols A containing an average of 1 to 5 ether groups per hydroxyl group.

**4.** The use claimed in claims 1 and 3, the polyols A having a hydroxyl value of 100 to 800.

**5.** The use claimed in claims 1 to 4, reaction products of 0.30 to 0.90 equivalent (based on hydroxyl groups of A) of monocarboxylic acids B being used.

**6.** The use claimed in claims 1 to 5, the monocarboxylic acids B containing 8 to 24 carbon atoms per molecule.

**7.** The use claimed in claims 1 to 6, with the proviso that the esterification products of A and B have a hydroxyl value of 15 to 500.

**8.** The use claimed in claims 1 to 7, reaction products of 0.10 to 0.95 equivalent (based on hydroxyl groups of A and isocyanate groups of C) of isocyanate C being used.

**9.** The use claimed in claims 1 to 8, with the proviso that the reaction products of components A, B and C are prepared in the presence of the oxidatively drying binder.

**10.** The use claimed in claims 1 to 9, the oxidative binders being selected from the groups consisting of alkyd resins and polybutadiene oils.

**Revendications**

**Revendications pour les Etats contractants suivants : AT, BE, CH, DE, ES, FR, GB, IT, LI, NL, SE**

**1.** Utilisation de produits réactionnels que l'on obtient en faisant réagir :
A. des polyols ayant un indice d'hydroxyle de 50 à 1.000, qui contiennent en moyenne au moins 3 groupes hydroxyle par molécule et, par groupe hydroxyle, en moyenne, de 0,5 à 15 groupes éther, mais, par molécule, en moyenne, pas plus de 20 groupes éther au total, et

13

B. de 0,05 à 0,90 équivalents (rapportés aux groupes hydroxyle de A) d'acides monocarboxyliques en $C_2$-$C_{30}$,

pour obtenir des composés ayant un indice d'acide de maximum 5, un indice d'hydroxyle de 10 à 800 et une teneur moyenne de 0,2 à 6 groupes hydroxyle par molécule

et en les faisant réagir ultérieurement avec

C. des quantités allant jusqu'à des quantités équivalentes (rapportées aux groupes hydroxyle du produit d'estérification de A et de B, d'une part et aux groupes isocyanate de C, d'autre part), d'isocyanate qui contient au moins une double ou une triple liaison C-C copolymérisable par molécule de C,

pour obtenir un polyester-uréthanne contenant des groupes éther,

comme diluants réactifs pour des liants siccatifs par oxydation.

2. Utilisation selon la revendication 1, dans laquelle les polyols A contiennent, en moyenne, de 4 à 8 groupes hydroxyle par molécule.

3. Utilisation selon les revendications 1 et 2, dans laquelle les polyols A contiennent, par groupe hydroxyle, en moyenne de 1 à 5 groupes éther.

4. Utilisation selon les revendications 1 à 3, dans laquelle les polyols A possèdent un indice d'hydroxyle de 100 à 800.

5. Utilisation selon les revendications 1 à 4, dans laquelle on utilise des produits réactionnels obtenus à partir de 0,30 à 0,90 équivalents (rapportés aux groupes hydroxyle de A) d'acides monocarboxyliques B.

6. Utilisation selon les revendications 1 à 5, dans laquelle les acides monocarboxyliques B possèdent de 8 à 24 atomes de carbone par molécule.

7. Utilisation selon les revendications 1 à 6, avec cette condition que les produits d'estérification de A et B possèdent un indice d'hydroxyle de 15 à 500.

8. Utilisation selon les revendications 1 à 7, dans laquelle on utilise des produits réactionnels de 0,10 à 0,95 équivalents (rapportés aux groupes hydroxyle de A et aux groupes isocyanate de C) d'isocyanate C.

9. Utilisation selon les revendications 1 à 8, avec cette condition que l'on prépare les produits réactionnels des composants A, B et C en présence du liant siccatif par oxydation.

10. Utilisation selon les revendications 1 à 9, dans laquelle on sélectionne le liant par oxydation parmi les groupes comprenant les résines alkydes et les huiles de polybutadiène.